# EUROPÄISCHE PATENTSCHRIFT

(11) **EP 4 097 440 B1**
(45) Veröffentlichungstag und Bekanntmachung des Hinweises auf die Patenterteilung: **30.04.2025**
(21) Anmeldenummer: 21720171.4
(22) Anmeldetag: 27.01.2021
(51) Int. Cl.: G01M 5/00, G01H 1/00, G01M 15/12, G01M 15/14, G01M 7/00

(54) **VERFAHREN UND GRAPHISCHE BENUTZEROBERFLÄCHE ZUR ANALYSE EINES MECHANISCHEN OBJEKTES**
METHOD AND GRAPHICAL USER INTERFACE FOR ANALYSING A MECHANICAL OBJECT
PROCÉDÉ ET SURFACE UTILISATEUR GRAPHIQUE POUR L'ANALYSE D'UN OBJET MÉCANIQUE

(30) Priorität: 27.01.2020 DE 102020200936
(43) Veröffentlichungstag der Anmeldung: 07.12.2022
(73) Patentinhaber: MTU Aero Engines AG, 80995 München (DE)
(72) Erfinder: THEURICH, Daniel, 80995 München (DE); JUNGE, Michael, 80995 München (DE)
(86) Internationale Anmeldenummer: PCT/DE2021/000012
(87) Internationale Veröffentlichungsnummer: WO 2021/151410

(56) Entgegenhaltungen:
- EP-A1- 0 654 163
- WO-A2-2007/071912
- CN-A- 109 682 562
- US-A- 5 152 172
- US-A1- 2009 301 055

## Beschreibung

### Technisches Feld

Im Folgenden werden Ausführungsformen offenbart, die sich auf ein Verfahren und eine Vorrichtung zur Analyse eines Bewegungsverhaltens eines mechanischen Objektes beziehen, beispielsweise zur Analyse eines Schwingungsverhaltens eines integral gefertigten Schaufelrades. Des Weiteren werden graphische Benutzeroberflächen offenbart, die zur Anzeige und/oder Konfiguration eines der offenbarten Verfahren zur Analyse eines Bewegungsverhaltens eines mechanischen Objektes eingerichtet sind.

### Hintergrund

Das Vermessen von mechanischen Objekten, z.B. von Verdichterrädern für Turbinen, kann traditionell durch Anregen des Objektes erfolgen, welche eine mechanische Antwort des Objektes auslöst, die als zeitabhängiges Signal messtechnisch erfasst werden kann. Zur Bestimmung der mechanischen Eigenschaften des Objektes, z.B. dessen Masse, Dämpfung und/oder dessen Eigenfrequenzen und Schwingungsmoden, kann das Zeitsignal in den Frequenzbereich umgewandelt und damit eine entsprechende Übertragungsfunktion ausgelegt werden, die dann wiederum als Modell Auskunft über die mechanischen Objekteigenschaften ermöglicht und simuliert werden kann. Eine Messvorrichtung für ein solches Verfahren ist in der DE 102009010375 A1 offenbart. Zur Veranschaulichung der Schwingungseigenschaften eines mechanischen Systems wird traditionell das Campbell Diagramm genutzt. In diesem Diagramm werden die Eigenfrequenzen des mechanischen Systems über einer Drehzahl, z.B. der Drehzahl eines rotierenden mechanischen Systemteils, aufgetragen. Zusätzlich werden auch die auf das System wirkenden Anregungen aufgetragen. Kritische Resonanzfrequenzen ergeben sich dort, wo eine Eigenfrequenz und eine Anregung aufeinander treffen. Allerdings besteht ein mechanisches System, z.B. ein Turbinenverdichterrad, aus mehreren Teilen und weist im Betrieb ein kompliziertes Schwingungsverhalten auf, welches von verschiedenen Umgebungsparametern abhängig ist. Das Campbell Diagramm kann regelmäßig nur ein Teil eines solchen komplizierten Schwingungsverhaltens darstellen. Weitere Beispiele für Verfahren, die die Analyse mechanischer Objekte ermöglichen, sind in den Dokumenten US 2009/301055 A1 oder WO 2007/071912 A2 beschrieben.

### Beschreibung

Demgegenüber ergibt sich das Problem eine Analyse eines, Bewegungsverhaltens eines mechanischen Objektes zu verbessern.

Dieses Problem wird durch die Erfindung gelöst, welche durch die Gegenstände der unabhängigen Ansprüche definiert ist. Die abhängigen Ansprüche betreffen entsprechende Weiterbildungen. Im Folgenden werden verschiedene Aspekte und Ausführungsformen dieser Aspekte offenbart, die zusätzliche Merkmale und Vorteile bereitstellen.

Einige Ausführungsformen lösen das Problem, verschiedene Messungen in ein Diagramm zu integrieren. Dazu werden verschiedene Messungen, welche sich jeweils in einzelnen Parametern unterscheiden, zu einem Datensatz fusioniert und in einem Spektrogramm abgebildet. Den fusionierten Messwerten können dann im Spektrogramm noch zusätzliche Informationen, z.B. analytisch berechnete Eigenfrequenzen oder analytisch berechnete Anregungsfrequenzen, überlagert werden. Dadurch ist eine effektive Analyse des Schwingungsverhaltens eines mechanischen Objektes möglich.

Ein erster Aspekt betrifft ein Verfahren, mit den Schritten:
- Durchführen mehrerer Messungen einer mechanischen Bewegung, mittels positionsbasierten Verfahren und/oder kraftbasierten Verfahren an einer Vielzahl von Messstellen an dem mechanischen Objekt, wobei die Messungen sich jeweils in einem oder mehreren, die Messung beeinflussenden Parametern unterscheiden, wobei der eine oder die mehreren Parameter zur Differenzierung der Messungen eine Drehzahl des mechanischen Objekts umfassen;- Bestimmen eines Spektrogramms auf Basis von Messdaten der Messungen und in Abhängigkeit eines vorbestimmten Parameters des mechanischen Objektes, insbesondere zur Auswahl eines Messdatums einer Messung;-Bestimmen einer oder mehrerer Anregungen des mechanischen Objektes, wobei die Anregungen maximale Amplituden für das entsprechende Spektrogramm sind.

Ein mechanisches Objekt kann insbesondere eine Scheibe sein bzw. ein scheibenförmiges Objekt, welches insbesondere unwuchtig sein kann. Insbesondere kann ein mechanisches Objekt aus einem Metall bestehen oder aus einem Kunststoff. Insbesondere kann ein mechanisches Objekt ein Metall umfassen oder einen Kunststoff umfassen. Ein mechanisches Objekt kann insbesondere ein Teil einer Turbine oder eines Turboladers sein. Insbesondere kann ein mechanisches Objekt ein Schaufelrad sein oder ein Schaufelrad umfassen und insbesondere ein Schaufelrad einer Verdichterstufe einer Turbine sein. Insbesondere kann ein mechanisches Objekt ein Propeller oder ein Impeller sein. Ein mechanisches Objekt kann aber auch ein Musikinstrument sein, insbesondere ein Schlaginstrument, z.B. ein Tomtom oder ein Hi-Hat.

Messungen erfolgen an einer Vielzahl von Messstellen. Zusätzlich oder alternativ können auch redundante Messungen erfolgen, also Messungen an ein und derselben Messstelle, welche mehrmals vorgenommen werden. Im Prinzip eignen sich dafür alle Messverfahren zum Erfassen einer mechanischen Bewegung, insbesondere positionsbasierte Verfahren und/oder kraftbasierte Verfahren. Messungen können also insbesondere durch Positionssensoren, Geschwindigkeitssensoren, Beschleunigungssensoren durchgeführt werden. Zusätzlich oder alternativ können Messungen auch durch Kraftsensoren durchgeführt werden, insbesondere durch Dehnungsmessstreifen, die auf die entsprechenden Messstellen aufgeklebt werden. Bewegungen und Kräfte können zusätzlich oder alternativ auch mit piezoelektrischen Sensoren erfasst werden. Ebenso ist eine laserbasierte Messung, insbesondere eine laservibrometrische Messung möglich, um eine oder mehrere Messungen durchzuführen.

Ein oder mehrere Parameter, in denen sich zwei oder mehrere, insbesondere alle, Messungen bzw. die dazugehörigen Messdaten unterscheiden, können Parameter des mechanischen Objektes sein und/oder Parameter der Umgebung, in der das mechanische Objekt wirkt. Eine solche Umgebung kann insbesondere eine Maschine sein, in der das mechanische Objekt eingebaut ist. Wenn das mechanische Objekt ein Schaufelrad ist, kann sich ein Parameter zur Differenzierung der Messungen beispielsweise aus einer Turbine ergeben, in der das Schaufelrad eingesetzt wird. Ein oder mehrere Parameter zur Differenzierung der Messungen **ist** eine Drehzahl, in der das mechanische Objekt betrieben wird oder können also insbesondere sein: eine Position der Messstelle; eine andere Beschleunigungssituation, in der sich das mechanische Objekt befindet, z.B. ein Hochfahren oder ein Runterfahren einer Turbine; ein aerodynamischer Parameter, zum Beispiel ein aerodynamischer Druck, den das mechanische Objekt ausgesetzt ist. Beispielsweise kann das mechanische Objekt ein Schaufelrad betreffen bzw. eine Schaufel eines Schaufelrades. Dann kann sich ein die Messungen differenzierende Parameter aus einem unterschiedlichen verstellten Winkel der Schaufeln ergeben, der während verschiedener Messungen eingestellt ist. Auch eine Temperatur des mechanischen Objektes bzw. der Umgebung des mechanischen Objektes kann ein Parameter sein, welcher zwischen verschiedenen Messungen variiert wird. Selbstverständlich können auch eine Mehrzahl von Parametern bei verschiedenen Messungen variiert werden.

Ein Spektrogramm kann insbesondere dadurch bestimmt werden, dass die einzelnen Messungen in einem vorgelagerten Verfahrensschritt in Teilspektrogramme transformiert werden. Die Teilspektrogramme werden dann in einem nachfolgenden Schritt in ein gemeinsames Spektrogramm fusioniert. Alternativ kann eine Fusion der Messdaten auch bereits im Zeitbereich erfolgen und die fusionierten Daten gemeinsam in einem nachgelagerten Schritt in ein Spektrogramm transformiert werden. In einer weiteren Alternative können Messdaten einer oder mehrere, aber nicht aller, Messungen im Zeitbereich fusioniert werden und darauf basierend ein erstes Teilspektrogramm erstellt werden. Die restlichen Messungen können in einzelne weitere Teilspektrogramme transformiert werden und diese Teilspektrogramme dann zu einem gemeinsamen Teilspektrogramm fusioniert werden. Dann können die Teilspektrogramme, die sowohl im Zeitbereich fusionierte Daten als auch im Frequenzbereich fusionierte Daten enthalten, zu einem gemeinsamen Spektrogramm fusioniert werden.

Ein vorbestimmter Parameter in Abhängigkeit dessen das Spektrogramm bzw. die Teilspektrogramme erstellt werden kann insbesondere eine Amplitude der Schwingung an der entsprechenden Frequenz sein. In diesem Fall wird die Amplitude an einer bestimmten Frequenz der verschiedenen Messungen bzw. Messdaten einzelner Messungen an einer bestimmten Stelle verglichen und dann die maximale Amplitude für das entsprechende Spektrogramm ausgewählt. Der Parameter muss dabei nicht unbedingt die maximale Amplitude betreffen. Alternativ kann auch eine minimale Amplitude ausgewählt werden und somit die Messung für das gemeinsame Spektrogramm bzw. ein aus mehreren Messungen fusioniert das Teilspektrogramm, ausgewählt werden, welche die geringste Amplitude an einer bestimmten Frequenz und zu einer bestimmten Zeit bzw. an einem bestimmten zeitabhängigen Parameterwert aufweist. Alternativ kann ein Parameter auch einen Durchschnittswert betreffen oder einen statistischen Wert, wie zum Beispiel eine Varianz. Um Vergleichswerte an einzelnen Positionen des Spektrogramms ermitteln zu können, kann unter Umständen eine Interpolation zwischen Messdaten einzelner oder mehrerer Messungen erfolgen. Dies wird später ausführlich erklärt.

Ein Bestimmen einer oder mehrerer Anregungen des mechanischen Objektes kann insbesondere bereits während der verschiedenen Messungen erfolgen. Insbesondere kann auch hier eine oder mehrere Interpolation zwischen verschiedenen Messdaten und/oder Spektrogramm Daten erfolgen, um eine oder mehrere Anregungen zu bestimmen. Beispielsweise können sich durch die Messdaten in einem Teilspektrogramm oder dem gemeinsamen Spektrogramm Bereiche ergeben, in denen eine oder mehrere Anregungen, die während der Messung erfolgt sind, um das mechanische Objekt in einen dynamischen Zustand zu versetzen, im Spektrogramm identifiziert werden und entsprechend linear interpoliert werden, sodass die einzelnen Spektrogrammwerte, welche zur einer Anregung gehören durch eine gerade verbunden werden, die durch den Nullpunkt des Spektrogramms verläuft. Diese Form wird insbesondere im Campbell Diagramm verwendet.

Ein Abbilden der Anregungen in dem Spektrogramm kann insbesondere eine Darstellung in einer grafischen Benutzeroberfläche umfassen. Zusätzlich oder alternativ kann eine solche Abbildung auch auf Basis eines entsprechenden Look-up-Tables erfolgen. Zusätzlich oder alternativ kann eine Abbildung der Anregungen in dem Spektrogramm modellbasiert erfolgen, d. h. im Spektrogramm dargestellte Messdaten und/oder im Spektrogramm dargestellte Anregungen können funktional modelliert werden, sodass sie mit weniger Aufwand abgespeichert werden können und zum Beispiel durch eine grafische Benutzeroberfläche entsprechend visualisiert werden können.

Eine Ausführungsform des ersten Aspekts betrifft ein Verfahren, wobei das Spektrogramm auf Basis einer Zeit oder einer zeitabhängigen Größe, insbesondere einer Drehzahl des Objektes oder Drehzahl eines Teils des Objektes bestimmt wird.

Eine Drehzahl des mechanischen Objektes kann insbesondere eine Drehzahl einer Turbine sein, in der sich das mechanische Objekt bewegt, wenn dieses ein Schaufelrad darstellt. In diesem Fall wird das Spektrogramm nicht über einer Zeit abgebildet, sondern über dieser Drehzahl, sodass bei verschiedenen Drehzahlen die Frequenzverläufe ersichtlich sind. Insbesondere kann eine Zeit bzw. eine zeitabhängige Größe nichtlinear abgebildet sein, insbesondere können Abschnitte mit einer geringeren Auflösung abgebildet sein, wenn diese weniger interessante Abschnitte des Spektrogramms enthalten. Zusätzlich und alternativ können Abschnitte mit einer höheren Auflösung dargestellt werden, insbesondere mit höheren Zeit- bzw. Drehzahlauflösung. So können Messdaten, welche interessante Abschnitte aufweisen, mit einer größeren Auflösung dargestellt werden.

Ein Abbilden in einem Spektrogramm muss nicht unbedingt ein graphisches Abbilden sein. Ein Abbilden kann auch ein Abbilden in einem Computerspeicher umfassen, so dass auf die fusionierte Messinformation gemäß der Struktur eines Spektrogramms zugegriffen werden kann.

Eine Ausführungsform des ersten Aspekts betrifft ein Verfahren, umfassend den Schritt:
- Abbilden einer, insbesondere analytischen und/oder simulatorischen, Vorhersage einer Frequenz oder eines Frequenzbereichs des mechanischen Objektes in dem Spektrogramm.

Dem gemeinsamen Spektrogramm können insbesondere weitere Informationen überlagert werden. Diese Informationen können zum Beispiel analytisch und/oder simulatorisch ermittelte Eigenfrequenzen des mechanischen Objektes betreffen. Durch eine Überlagerung von analytisch bzw. simulatorisch bestimmten Eigenfrequenzen können im Spektrogramm die durch die Messungen erhaltenen Eigenfrequenzen des mechanischen Objektes leicht mit den analytisch bzw. simulatorisch ermittelten Eigenfrequenzen verglichen werden. Dadurch können insbesondere Messfehler entdeckt werden. Eine Überlagerung von analytisch bzw. simulatorisch bestimmten Informationen kann auch ein Teilspektrogramm betreffen, insbesondere um Bereiche eines oder mehrerer Teilspektrogramm zu identifizieren, welche Messdaten umfassen, die vor der Fusion in das gemeinsame Spektrogramm entfernt werden sollen. Dies kann zum Beispiel für Messdaten zutreffen, bei denen ein Vergleich zwischen analytisch bzw. simulatorisch bestimmten Vorhersagen ergibt, dass die Messdaten inferior sind. Diese können dann entfernt werden, um die Qualität des fusionierten Spektrogramms zu erhöhen.

Eine Ausführungsform des ersten Aspekts betrifft ein Verfahren, umfassen den Schritt:
- Interpolieren der Messinformation auf Basis vorgegebener Referenzpunkte, insbesondere eines Gitters in dem Spektrogramm.

Insbesondere zur Fusion von Teilspektrogramm einzelner oder mehrerer Messdaten kann eine Interpolation von frequenzbasierten und/oder zeitbasierten Informationen auf Basis von Messdaten erfolgen. Dabei können insbesondere die Messdaten einzelner und/oder verschiedener Messungen auf ein gemeinsames Gitter projiziert werden. Dieses Gitter kann eine sehr hohe Auflösung haben, also sehr engmaschig sein. Sollten einzelne oder mehrere Messdaten an den Gitterpunkten keine Informationen bereitstellen, dann wird an den jeweiligen Gitterpunkt ein entsprechender Messdatenpunkt im Zeitbereich oder im Frequenzbereich interpoliert.

Eine Ausführungsform des ersten Aspekts betrifft ein Verfahren, umfassend die Schritte:
- Vergleichen der Messergebnisse der einzelnen Messungen an einem oder mehreren Referenzpunkten; und
- Auswählen eines Messergebnisses oder Fusionieren von Messergebnissen auf Basis der verglichenen Messergebnisse und auf Basis eines vorbestimmten Parameters.

Dann können an den einzelnen Punkten die interpolierten oder gemessenen Informationen einzelner Messungen miteinander verglichen werden, um, wie oben beschrieben, eine Auswahl auf Basis eines vorbestimmten Parameters aus den zu vergleichenden Messdaten durchzuführen. Beispielsweise können sich interpolierte bzw. gemessene Informationen verschiedener Messdaten an einem Gitterpunkt in ihrer maximalen Schwingungsamplitude unterscheiden und entsprechend des vorbestimmten Parameters diejenige Messung für das gemeinsame/fusionierte Spektrogramm ausgewählt werden, welche die maximale Schwingungsamplitude aufweist.

Eine Ausführungsform des ersten Aspekts betrifft ein Verfahren, umfassend den Schritt:
- Anzeigen von Punkten und/oder Bereichen des Spektrogramms auf Basis eines vorbestimmten Kriteriums.

Um eine Komplexitätsreduktion der in einem gemeinsamen Spektrogramm abgebildeten Daten zu erreichen, können bestimmte Bereiche bzw. bestimmte Punkte im Spektrogramm auf Basis eines vorbestimmten Kriteriums ausgewählt werden. Insbesondere kann ein solches vorbestimmtes Kriterium eine oder mehrere Bereiche umfassen, in welche eine Schwingungsamplitude einen bestimmten Schwellenwert überschreitet. Zusätzlich oder alternativ kann der Bereich oder der Punkt mit der maximalen Schwingungsamplitude, welche in dem Spektrogramm abgebildet ist, angezeigt werden. Eine solche Anzeige kann bereits durch die Anzeige des entsprechenden Wertes erfolgen. Zusätzlich oder alternativ kann eine solche Anzeige auch eine farbliche Markierung umfassen und/oder eine Markierung durch eine überlagerte, geometrische Form, welche den entsprechenden Bereich bzw. den entsprechenden Punkt umgibt. Die zuletzt erwähnten Anzeigemöglichkeiten bieten sich an, wenn das Spektrogramm in einer grafischen Benutzeroberfläche dargestellt wird.

Eine Ausführungsform des ersten Aspekts betrifft ein Verfahren, umfassend den Schritt:
- Filtern einer oder mehrerer Messergebnisse vor der Bestimmung des Spektrogramms.

Eine Filterung einer oder mehrerer Messergebnisse kann insbesondere dort vorgenommen werden, wo die Messergebnisse inferiore Messinformationen aufweisen. Insbesondere können solche Messergebnisse herausgefiltert werden, welche das fusionierte Spektrogramm zu stark beeinflussen. Zusätzlich oder alternativ können fehlerhafte Messinformationen herausgefiltert werden. Eine Filterung kann sowohl einzelne Bereiche oder einzelne Punkte einzelner Messungen umfassen. Zusätzlich oder alternativ kann eine Filterung auf den gesamten Messbereich einzelner oder mehrerer Messungen angewendet werden, beispielsweise eine Hochpassfilterung und/oder eine Tiefpassfilterung mit einem vorbestimmten Filter. Eine Hochpassfilterung kann zum Beispiel eingesetzt werden, um Bereiche herauszufiltern, welche sich voneinander nicht besonders unterscheiden. Eine Tiefpassfilterung kann zum Beispiel durchgeführt werden, um Bereiche herauszufiltern, welche sich zu stark von anderen Bereichen unterscheiden, zum Beispiel weil diese auf fehlerhafter Sensor-Information basieren.

Eine Ausführungsform des ersten Aspekts betrifft ein Verfahren, umfassend die Schritte:
- insbesondere manuelles, Auswählen eines Punktes und/oder Bereiches des Spektrogramms; und
- Anzeigen von Messergebnissen auf Basis des Punktes und/oder Bereiches.

Durch die Fusionierung von Messdaten zu einem Teilspektrogramm bzw. zu einem gemeinsamen Spektrogramm in Abhängigkeit eines vorbestimmten Parameters werden die Messinformationen der einzelnen Messungen in dem Spektrogramm nicht mehr abgebildet. Dieses Problem kann durch das Auswählen eines Punktes und/oder Bereiches in dem Spektrogramm, welches zum Beispiel einen Bereich und/oder einen Punkt mit einer maximalen Schwingungsamplitude betrifft, gelöst werden, indem das oder diejenigen einzelnen Messdaten, welche in dem ausgewählten Bereich bzw. in dem ausgewählten Punkt abgebildet sind durch das entsprechende Auswählen zugänglich gemacht werden. Beispielsweise kann ein Punkt mit einer sehr hohen Schwingungsamplitude im Spektrogramm ausgewählt werden und daraufhin diejenige Messung samt Messdaten angezeigt werden, in welchen dieser Punkt gemessen wurde.

Eine Ausführungsform des ersten Aspekts betrifft ein Verfahren, umfassend die Schritte:
- Auswählen eines Bereiches des Spektrogramms; und
Durchführen einer statistischen Analyse auf Basis der Informationen in diesem Bereich.

Ausgewählte Bereiche können ein oder mehreren statistischen Analysen unterzogen werden. Insbesondere können die statistischen Analysen dann auf Basis mehrerer Messdaten durchgeführt werden, welche in dem entsprechenden Bereich in dem Spektrogramm abgebildet wurden. Weiterhin kann, insbesondere wenn eine grafische Benutzeroberfläche verwendet wird, durch einen entsprechenden Schalter zwischen verschiedenen statistischen Analysen ausgewählt bzw. umgeschaltet werden, sodass die in den ausgewählten Bereichen abgebildeten Messinformation statistisch analysiert werden können. Eine statistische Analyse kann beispielsweise eine Histogramm-Analyse der in dem ausgewählten Bereich abgebildeten Messdaten umfassen. Eine statistische Analyse kann auch eine Maximalwertanalyse bzw. eine Schwellenwertanalyse bzw. eine Durchschnittswertanalyse umfassen, denen die Daten, welche in dem Spektrogramm ausgewählt wurden, unterliegen.

Eine Ausführungsform des ersten Aspekts betrifft ein Verfahren, wobei das Spektrogramm auf Basis einer Integral-Transformation bestimmt wird, insbesondere einer der folgenden Transformationen:
- Fourier-Transformation;
- Sinus-Transformation;
- Kosinus-Transformation;
- Wavelet-Transformation;
- Chirplet-Transformation.

Insbesondere können verschiedene Integral-Transformationen in dem Verfahren angewendet werden. Beispielsweise können in einem Schritt ein oder mehrere Messdaten (von einer oder mehreren entsprechenden Messungen) zunächst mit einer bestimmten Integral-Transformation, zum Beispiel mit einer Fourier-Transformation, in ein Teilspektrum umgewandelt werden. Andere Messdaten (von anderen Messungen) können mit einer anderen Integral-Transformation in ein weiteres Teilspektrum transformiert werden und diese beiden Teilspektren können in einem nachgelagerten Schritt zum gemeinsamen Spektrogramm fusioniert werden. Ebenfalls ist es möglich, insbesondere wenn eine grafische Benutzeroberfläche zur Darstellung des Spektrogramms verwendet wird, manuell zwischen verschiedenen Integral-Transformationen umzuschalten, sodass das Spektrogramm je nach der ausgewählten Integral-Transformation unterschiedliche Analyseschwerpunkte abbildet.

Eine Ausführungsform des ersten Aspekts betrifft ein Verfahren, umfassend den Schritt:
- Anzeigen des Spektrogramms in einer graphischen Benutzeroberfläche, insbesondere gemeinsam mit einem oder mehreren der folgenden Merkmale:
- eine oder mehrerer der vorhergesagten Frequenzen oder Frequenzbereiche;
- einen oder mehreren gemeinsame Referenzpunkte und/oder der interpolierten Punkte;
- eines ausgewählten Messergebnisses oder eines fusionierten Messergebnisses auf Basis der verglichenen Messergebnisse;
- Punkte oder Bereiche, die auf Basis eines vorbestimmten Kriteriums ermittelt wurden.
- gefilterten Punkte oder Bereiche der Messergebnisse;
- ein Ergebnis einer statistischen Analyse;
- eine verwendete Integraltransformation.

Eine Ausführungsform des ersten Aspekts betrifft ein Verfahren, umfassend die Schritte:
- Auswählen einer oder mehrerer Werte in der Frequenzdimension und/oder der zeitabhängigen Dimension des Spektrogramms;
- Anzeigen eines Verlaufs der zeitabhängigen Dimension an dem oder den ausgewählten Werten der Frequenzdimension und/oder eines Verlaufs der Frequenzdimension an der oder den ausgewählten Werten der zeitabhängigen Dimension.

Dabei umfasst eine zeitabhängige Information auch eine Zeit.

Ein anderer Aspekt betrifft eine graphische Benutzeroberfläche (GUI), die zur Anzeige und/oder Konfiguration einer Analyse eines Bewegungsverhaltens eines mechanischen Objektes nach dem ersten Aspekt eingerichtet ist.

### Kurze Beschreibung der Figuren

Weitere Vorteile und Merkmale ergeben sich aus den folgenden Ausführungsformen, die sich auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu zeigt, teilweise schematisiert:
Fig. 1 ein Spektrogramm zur Veranschaulichung einer Analyse nach einer offenbarten Ausführungsform,
Fig. 2 ein weiteres Spektrogramm zur Veranschaulichung einer Analyse nach einer offenbarten Ausführungsform.

In den folgenden Beschreibungen beziehen sich identische Bezugszeichen auf identische oder zumindest funktional äquivalente Merkmale.

In der folgenden Beschreibung wird auf die begleitenden Zeichnungen Bezug genommen, die einen Teil der Offenbarung bilden und in denen zur Veranschaulichung spezifische Aspekte gezeigt sind, in denen die vorliegende Offenbarung verstanden werden kann. Es versteht sich, dass andere Aspekte und/oder Merkmale verwendet werden können und funktionale, strukturelle oder logische Änderungen möglich sind, ohne den Umfang der vorliegenden Offenbarung zu verlassen. Die folgende detaillierte Beschreibung ist daher nicht einschränkend zu verstehen, da der Umfang der vorliegenden Erfindung durch die beigefügten Ansprüche definiert ist.

Generell gilt eine Offenbarung über ein beschriebenes Verfahren auch für eine entsprechende Vorrichtung, um das Verfahren durchzuführen, oder ein entsprechendes System, welches ein oder mehrere Vorrichtungen umfasst, und umgekehrt. Wenn beispielsweise ein spezieller Verfahrensschritt beschrieben wird, kann eine entsprechende Vorrichtung ein Merkmal umfassen, um den beschriebenen Verfahrensschritt durchzuführen, auch wenn dieses Merkmal in der Figur nicht explizit beschrieben oder dargestellt ist. Wenn andererseits beispielsweise eine spezielle Vorrichtung auf der Grundlage von Funktionseinheiten beschrieben wird, kann ein entsprechendes Verfahren einen Schritt umfassen, der die beschriebene Funktionalität ausführt, auch wenn solche Schritte in den Figuren nicht explizit beschrieben oder dargestellt sind. Ebenso kann ein System mit entsprechenden Vorrichtungsmerkmalen versehen werden oder mit Merkmalen, um einen bestimmten Verfahrensschritt auszuführen. Es versteht sich, dass Merkmale der verschiedenen zuvor oder nachfolgend beschriebenen beispielhaften Aspekte und Ausführungsformen miteinander kombiniert werden können, sofern nicht ausdrücklich anders angegeben.

### Beschreibung der Figuren

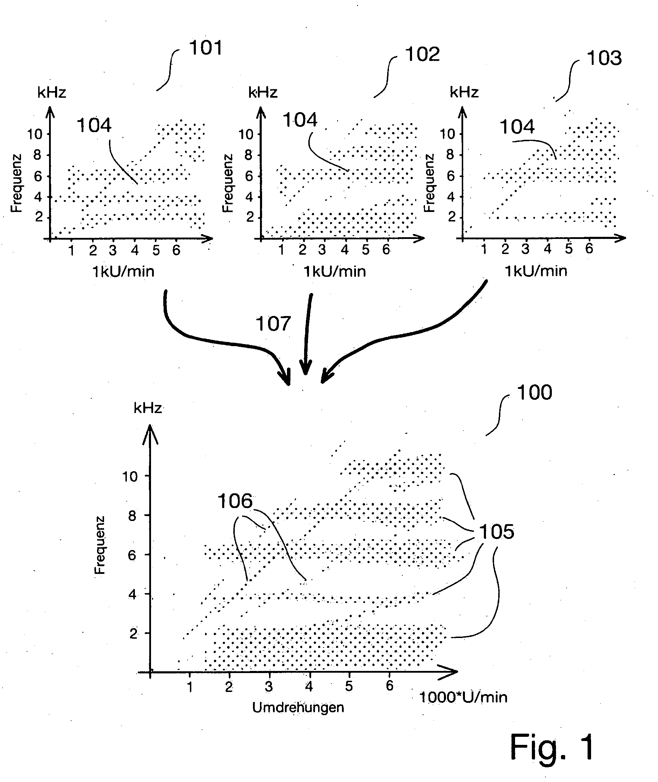

Die **Figur 1** zeigt ein Spektrogramm zur Veranschaulichung einer Analyse nach einer offenbarten Ausführungsform. Das Spektrogramm 100 betrifft eine Abbildung der Frequenzen, welche sich an einer Schaufel eines sich drehenden Schaufelrades in einer Turbine einstellen. Dabei wurden Frequenzen an der Schaufel von 0 bis ca. 10 kHz gemessen. Die Frequenzen werden in dem Spektrogramm über den Umdrehungen des Schaufelrades, an dem sich die Schaufel befindet, dargestellt. DieUmdrehungen können von 0 bis ca. 7000 Umdrehungen/min variieren. In dem Spektrogramm 100 sind bereits die fusionierten Messdaten 105, 106 dargestellt. Dabei sind Bereiche 105 abgebildet in denen sich verschiedene Eigenfrequenzen bzw. Schwingungsmoden der Schaufeln des Schaufelfahrrads befinden. Des Weiteren sind auch die Anregungen dargestellt, welche messtechnisch erfasst wurden. Diese Anregungen können sich beispielsweise aus den aerodynamischen Einflüssen ergeben, welche jeweils eine Schaufel auf das Schaufelrad ausübt. Das fusionierte Spektrogramm 100 ergibt sich aus drei durchgeführten Messungen 107, welche durch die Teilspektrogramme 101, 102 und 103 dargestellt sind. Die Punkte 104, welche in den Teilspektrogrammen abgebildet sind repräsentieren die erfassten Messsignale nach einer Kurzzeit-Fourier-Transformation

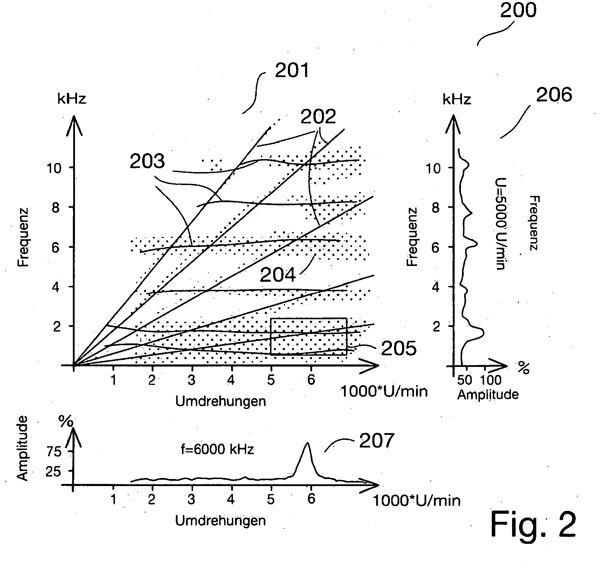

Die **Figur 2** betrifft ein erweitertes Spektrogramm 200 zur Veranschaulichung einer Analyse nach einer offenbarten Ausführungsform. Das Spektrogramm 201 betrifft Messdaten, welche aus verschiedenen Einzelmessungen (nicht dargestellt) fusioniert wurden und als Frequenzdarstellungen über den jeweils eingestellten Umdrehungen pro Minute abgebildet wurden. Zusätzlich zu dem in Fig. 1 dargestellten Spektrogramm befinden sich im Spektrogramm 201 augmentierte Informationen bezüglich der Eigenfrequenzen und der Anregungen. Den Bereichen 105, in denen verschiedene Eigenfrequenzen des Systems durch die Messdaten deutlich werden, sind analytisch bestimmte Eigenfrequenzen 203 überlagert. Zusätzlich wurden den Anregungen, welche zumindest teilweise messtechnisch erfasst wurden, analytisch bestimmte Anregungen 202 überlagert, sodass ein schneller Vergleich zwischen messtechnisch erfasster und fusionierte Information und analytisch berechneter Information hinsichtlich der Eigenfrequenzen als auch der Anregungen möglich ist. Zusätzlich wurde ein Bereich 205 ausgewählt in dem sich eine besonders kritische Eigenfrequenz vermuten lässt. Eine weitere Analyse kann mit den Projektionen des Frequenzverlaufs sowie des Amplitudenverlaufs erreicht werden. Das Diagramm 207, welches im unteren Bereich an das Spektrogramm 201 anschließt, offenbart einen Umdrehungsverlauf. Dieser wurde bei einer festen Frequenz von 6000 Hz angenommen und zeigt eine relative Schwingungsamplitude bezogen auf eine zuvor analytisch ermittelten maximalen Schwingungswert. Die relative Schwingungsamplitude ist aufgetragen über den verschiedenen Umdrehungen, welche das Schaufelrad einnehmen kann. Dabei zeigt sich, dass in dem Bereich bei knapp 6000 Umdrehungen pro Minute eine besonders große Schwingungsamplitude hervortritt. Zwangsläufig muss dieser Bereich, sollte er im Betrieb der Turbine erreicht werden oder durchfahren werden, mit weiteren Maßnahmen gedämpft werden, sodass es aufgrund der dort sich einstellenden großen Schwingungsamplituden nicht zu einer beschleunigten Materialermüdung des Schaufelrades kommt. Ein ähnliches Diagramm ist angrenzend an die rechte Seite des Spektrogramms durch das Diagramm 206 abgebildet. Dort wird ein Frequenzverlauf abgebildet, der bei einer Umdrehungsgeschwindigkeit von 5000 Umdrehungen pro Minute aufgenommen wurde. Dieser zeigt verschiedene lokale Maxima, welche sich an den Eigenfrequenzen der Schaufel bzw. des Schaufelrades einstellen. Zusätzlich zu dem im Spektrogramm 201 abgebildeten Messdaten bzw. den analytischen Vorhersagen der Eigenfrequenzen, lässt sich in dem projizierten Diagramm 206 die Schwingungsamplitude, die zuvor gemessen wurde, auch bezüglich ihres absoluten oder relativen Wertes genau darstellen. Auch dies führt zu einer schnelleren und flexibleren Abbildung des Schwingungsverhaltens der Schaufel des Schaufelrades.

### Bezugszeichenliste

100 Spektrogramm zur Veranschaulichung einer Analyse nach einer offenbarten Ausführungsform
101 Messdaten einer ersten Messung in einem Teilspektrogramm
102 Messdaten einer zweiten Messung in einem Teilspektrogramm
103 Messdaten einer dritten Messung in einem Teilspektrogramm
104 Messdaten zu Eigenfrequenzen und Anregungen in Spektrogrammdarstellung
105 gemessene und fusionierte Messdaten eines mechanischen Objektes in Spektrogrammdarstellung
106 gemessene und fusionierte Anregungen eines mechanischen Objektes in Spektrogrammdarstellung
107 Fusion mehrerer Messdaten zu einem Spektrogramm
200 Spektrogramm zur Veranschaulichung einer Analyse nach einer offenbarten Ausführungsform
201 Spektrogramm
202 analytisch bestimmte Anregungen eines mechanischen Objektes
203 analytisch bestimmte Eigenfrequenzen des mechanischen Objektes
204 aus verschiedenen Messdaten ausgewählte maximale Schwingungsamplitude
205 ausgewählter Bereich aus dem Spektrogramm
206 Schwingungsamplitude über der Frequenz bei einer vorgegebenen Umdrehungszahl
207 Schwingungsamplitude über der Umdrehung bei einer vorgegebenen Frequenz

## Patentansprüche

1. Verfahren zur Analyse eines Bewegungsverhaltens eines mechanischen Objektes, mit den Schritten:
- Durchführen mehrerer Messungen (101, 102, 103) einer mechanischen Bewegung, mittels positionsbasierten Verfahren und/oder kraftbasierten Verfahren an einer Vielzahl von Messstellen an dem mechanischen Objekt, wobei die Messungen sich jeweils in einem oder mehreren, die Messung beeinflussenden Parametern unterscheiden, wobei der eine oder die mehreren Parameter zur Differenzierung der Messungen eine Drehzahl des mechanischen Objekts umfassen;
- Bestimmen eines Spektrogramms (100) auf Basis von Messdaten (104) der Messungen (101, 102, 103) und in Abhängigkeit eines vorbestimmten Parameters des mechanischen Objektes, insbesondere zur Auswahl eines Messdatums einer Messung;
- Bestimmen einer oder mehrerer Anregungen (106) des mechanischen Objektes, wobei die Anregungen maximale Amplituden für das entsprechende Spektrogramm sind;
- Abbilden der Anregungen in dem Spektrogramm (100).

2. Das Verfahren nach dem vorherigen Anspruch, wobei das
Spektrogramm (100) auf Basis einer Zeit oder einer zeitabhängigen Größe, insbesondere einer Drehzahl des Objektes oder Drehzahl eines Teils des Objektes bestimmt wird.

3. Das Verfahren nach einem der vorherigen Ansprüche, umfassend den Schritt:
- Abbilden einer, insbesondere analytischen, Vorhersage einer Frequenz (203) oder eines Frequenzbereichs des mechanischen Objektes in dem Spektrogramm.

4. Das Verfahren nach einem der vorherigen Ansprüche, umfassen den Schritt:
- Interpolieren der Messdaten auf Basis gemeinsamer Referenzpunkte, insbesondere eines gemeinsamen Gitters in dem Spektrogramm (100).

5. Das Verfahren nach einem der vorherigen Ansprüche, umfassend die Schritte:
- Vergleichen der Messdaten der einzelnen Messungen an einem oder mehreren Referenzpunkten; und
- Auswählen eines Messergebnisses oder Fusionieren (107) von Messdaten (101, 102, 103) auf Basis der verglichenen Messdaten und auf Basis eines vorbestimmten Parameters.

6. Das Verfahren nach einem der vorherigen Ansprüche, umfassend den Schritt:
- Anzeigen von Punkten und/oder Bereichen des Spektrogramms (100, 200) auf Basis eines vorbestimmten Kriteriums.

7. Das Verfahren nach einem der vorherigen Ansprüche, umfassend den Schritt:
- Filtern einer oder mehrerer Messdaten einer oder mehrerer Messungen vor der Bestimmung des Spektrogramms (100, 200).

8. Das Verfahren nach einem der vorherigen Ansprüche, umfassend die Schritte:
- insbesondere manuelles, Auswählen eines Punktes (205) und/oder Bereiches des Spektrogramms (100, 200); und
- Anzeigen von Messdaten (101, 102, 103) auf Basis des Punktes und/oder Bereiches.

9. Das Verfahren nach einem der vorherigen Ansprüche, umfassend die Schritte:
- Auswählen eines Bereiches des Spektrogramms (100, 200); und
- Durchführen einer statistischen Analyse auf Basis von Messdaten in diesem Bereich.

10. Das Verfahren nach einem der vorherigen Ansprüche, wobei das Spektrogramm auf Basis einer Integral-Transformation bestimmt wird, insbesondere einer:
- Fourier-Transformation;
- Sinus-Transformation;
- Kosinus-Transformation;
- Wavelet-Transformation;
- Chirplet-Transformation.

11. Das Verfahren nach einem der vorherigen Ansprüche, umfassend den Schritt:
- Anzeigen des Spektrogramms (100, 200) in einer graphischen Benutzeroberfläche, insbesondere gemeinsam mit einem der folgenden Merkmale:
- einem oder mehreren der vorhergesagten Frequenzen oder Frequenzbereiche;
- einem oder mehreren gemeinsamen Referenzpunkten und/oder der interpolierten Punkte;
- Punkten oder Bereichen, die auf Basis eines vorbestimmten Kriteriums ermittelt wurden;
- gefilterten Punkten oder Bereichen der Messdaten;
- einem Ergebnis einer statistischen Analyse;
- einer verwendeten Integral-Transformation.

12. Verfahren nach einem der vorherigen Ansprüche, umfassend die Schritte:
- Auswählen einer oder mehrerer Werte in der Frequenzdimension und/oder der zeitabhängigen Dimension des Spektrogramms (100, 200);
- Anzeigen eines Verlaufs der zeitabhängigen Dimension (207) an dem oder den ausgewählten Werten der Frequenzdimension und/oder eines Verlaufs der Frequenzdimension (206) an der oder den ausgewählten Werten der zeitabhängigen Dimension.

13. Eine graphische Benutzeroberfläche, die zur Anzeige und/oder Konfiguration einer Analyse eines Bewegungsverhaltens eines mechanischen Objektes nach einem der Ansprüche 1 - 12 eingerichtet ist.

## Claims

1. Method for analyzing a movement behavior of a mechanical object, comprising the steps of:
- carrying out a plurality of measurements (101, 102, 103) of a mechanical movement by means of position-based methods and/or force-based methods at multiple measuring points on the mechanical object, wherein the measurements each differ in one or more parameters influencing the measurement, wherein the one or more parameters for differentiating the measurements comprise a rotational speed of the mechanical object;
- determining a spectrogram (100) on the basis of measurement data (104) of the measurements (101, 102, 103) and according to a predetermined parameter of the mechanical object, in particular for selecting a measurement datum of a measurement;
- determining one or more excitations (106) of the mechanical object, wherein the excitations are maximum amplitudes for the corresponding spectrogram;
- mapping the excitations in the spectrogram (100).

2. The method according to the preceding claim, wherein the spectrogram (100) is determined on the basis of a time or a time-dependent variable, in particular a rotational speed of the object or rotational speed of a part of the object.

3. The method according to any of the preceding claims, comprising the step of:
- mapping a prediction, in particular an analytical prediction, of a frequency (203) or a frequency range of the mechanical object in the spectrogram.

4. The method according to any of the preceding claims, comprising the step of:
- interpolating the measurement data on the basis of common reference points, in particular a common grid in the spectrogram (100).

5. The method according to any of the preceding claims, comprising the steps of:
- comparing the measurement data of the individual measurements at one or more reference points; and
- selecting a measurement result or merging (107) measurement data (101, 102, 103) on the basis of the compared measurement data and on the basis of a predetermined parameter.

6. The method according to any of the preceding claims, comprising the step of:
- displaying points and/or regions of the spectrogram (100, 200) on the basis of a predetermined criterion.

7. The method according to any of the preceding claims, comprising the step of:
- filtering one or more measurement data from one or more measurements before determining the spectrogram (100, 200).

8. The method according to any of the preceding claims, comprising the steps of:
- in particular manually selecting a point (205) and/or region of the spectrogram (100, 200); and
- displaying measurement data (101, 102, 103) on the basis of the point and/or region.

9. The method according to any of the preceding claims, comprising the steps of:
- selecting a region of the spectrogram (100, 200); and
- carrying out a statistical analysis on the basis of measurement data in this region.

10. The method according to any of the preceding claims, wherein the spectrogram is determined on the basis of an integral transform, in particular a:
- Fourier transform;
- sine transform;
- cosine transform;
- wavelet transform;
- chirplet transform.

11. The method according to any of the preceding claims, comprising the step of: - displaying the spectrogram (100, 200) in a graphical user interface, in particular together with one of the following features:
- one or more of the predicted frequencies or frequency ranges;
- one or more common reference points and/or the interpolated points;
- points or regions determined on the basis of a predetermined criterion;
- filtered points or regions of the measurement data;
- a result of a statistical analysis;
- an integral transform used.

12. Method according to any of the preceding claims, comprising the steps of:
- selecting one or more values in the frequency dimension and/or the time-dependent dimension of the spectrogram (100, 200);
- displaying a plot of the time-dependent dimension (207) at the selected value(s) of the frequency dimension and/or a plot of the frequency dimension (206) at the selected value(s) of the time-dependent dimension.

13. A graphical user interface designed to display and/or configure an analysis of a movement behavior of a mechanical object according to any of claims 1-12.

## Revendications

1. Procédé permettant l'analyse d'un comportement de mouvement d'un objet mécanique, comportant les étapes consistant à :
- effectuer plusieurs mesures (101, 102, 103) d'un mouvement mécanique au moyen de procédés basés sur une position et/ou de procédés basés sur une force, en une pluralité de points de mesure sur l'objet mécanique, dans lequel les mesures diffèrent respectivement en un ou plusieurs paramètres influençant la mesure, dans lequel le ou les paramètres permettant de différencier les mesures comprennent une vitesse de rotation de l'objet mécanique ;
- déterminer un spectrogramme (100) sur la base de données de mesure (104) des mesures (101, 102, 103) et en fonction d'un paramètre prédéterminé de l'objet mécanique, en particulier pour la sélection d'une date de mesure d'une mesure ;
- déterminer une ou plusieurs excitations (106) de l'objet mécanique, dans lequel les excitations sont des amplitudes maximales pour le spectrogramme correspondant ;
- représenter les excitations dans le spectrogramme (100).

2. Procédé selon la revendication précédente, dans lequel le spectrogramme (100) est déterminé sur la base d'un temps ou d'une grandeur dépendant du temps, en particulier une vitesse de rotation de l'objet ou une vitesse de rotation d'une partie de l'objet.

3. Procédé selon l'une des revendications précédentes, comprenant l'étape consistant à :
- représenter une prédiction, en particulier analytique, d'une fréquence (203) ou d'un domaine fréquentiel de l'objet mécanique dans le spectrogramme.

4. Procédé selon l'une des revendications précédentes, comprenant l'étape consistant à :
- interpoler les données de mesure sur la base de points de référence communs, en particulier d'une grille commune dans le spectrogramme (100).

5. Procédé selon l'une des revendications précédentes, comprenant les étapes consistant à :
- comparer les données de mesure de chaque mesure à un ou plusieurs points de référence ; et
- sélectionner un résultat de mesure ou fusionner (107) des données de mesure (101, 102, 103) sur la base des données de mesure comparées et sur la base d'un paramètre prédéterminé.

6. Procédé selon l'une des revendications précédentes, comprenant l'étape consistant à :
- afficher des points et/ou des zones du spectrogramme (100, 200) sur la base d'un critère prédéterminé.

7. Procédé selon l'une des revendications précédentes, comprenant l'étape consistant à :
- filtrer une ou plusieurs données de mesure d'une ou plusieurs mesures avant de déterminer le spectrogramme (100, 200).

8. Procédé selon l'une des revendications précédentes, comprenant les étapes consistant à :
- sélectionner, en particulier manuellement, un point (205) et/ou une zone du spectrogramme (100, 200) ; et
- afficher des données de mesure (101, 102, 103) sur la base du point et/ou de la zone.

9. Procédé selon l'une des revendications précédentes, comprenant les étapes consistant à :
- sélectionner une zone du spectrogramme (100, 200) ; et
- effectuer une analyse statistique sur la base de données de mesure dans ladite zone.

10. Procédé selon l'une des revendications précédentes, dans lequel le spectrogramme est déterminé sur la base d'une transformation intégrale, en particulier une :
- transformation de Fourier ;
- transformation sinusoïdale ;
- transformation en cosinus ;
- transformation en ondelettes ;
- transformation chirplet.

11. Procédé selon l'une des revendications précédentes, comprenant l'étape consistant à :
- afficher le spectrogramme (100, 200) dans une interface utilisateur graphique, en particulier en commun avec l'une des caractéristiques suivantes :
- une ou plusieurs des fréquences ou domaines fréquentiels précités ;
- un ou plusieurs points de référence communs et/ou des points interpolés ;
- des points ou des zones définis sur la base d'un critère prédéterminé ;
- des points ou des zones filtrés des données de mesure ;
- un résultat d'une analyse statistique ;
- une transformation intégrale utilisée.

12. Procédé selon l'une des revendications précédentes, comprenant les étapes consistant à :
- sélectionner une ou plusieurs valeurs dans la dimension fréquentielle et/ou la dimension dépendant d'un temps du spectrogramme (100, 200) ;
- afficher une évolution de la dimension dépendant d'un temps (207) sur la ou les valeurs sélectionnées de la dimension fréquentielle et/ou une évolution de la dimension fréquentielle (206) sur la ou les valeurs sélectionnées de la dimension dépendant d'un temps.

13. Interface utilisateur graphique configurée pour afficher et/ou configurer une analyse d'un comportement de mouvement d'un objet mécanique selon l'une des revendications 1 à 12.
